# NEUE EUROPÄISCHE PATENTSCHRIFT

(11) **EP 1 529 718 B2**
(45) Veröffentlichungstag und Bekanntmachung des Hinweises auf die Entscheidung über den Einspruch: **12.08.2009**
(45) Hinweis auf die Patenterteilung: 24.01.2007
(21) Anmeldenummer: 04105481.8
(22) Anmeldetag: 03.11.2004
(51) Int. Cl.: B62D 7/14

(54) **Kraftfahrzeug mit lenkbaren Vorderrädern und einer Lenkfunktion an den Hinterrädern**
Motor vehicle with steerable front wheels and steering function of rear wheels
Véhicule automobile avec des roues avant dirigeables et une fonction de braquage des roues arrières

(30) Priorität: 06.11.2003 DE 10351908
(43) Veröffentlichungstag der Anmeldung: 11.05.2005
(73) Patentinhaber: Bayerische Motoren Werke Aktiengesellschaft, 80809 München (DE)
(72) Erfinder: Pauly, Axel, 85757, Karlsfeld (DE); Baumgarten, Götz, 85757, Karlsfeld (DE); Fleck, Reidar, 85221, Dachau (DE); Smakman, Hendrikus, 80636, München (DE)

(56) Entgegenhaltungen:
- EP-A- 0 316 002
- EP-A- 0 999 117
- EP-A- 1 234 741
- DE-A- 19 809 192
- US-A- 5 615 117

## Beschreibung

Die Erfindung betrifft ein Kraftfahrzeug mit lenkbaren Vorderrädern und einem Lenksystem, mit welchem dem vom Fahrer vorgegebenen Lenkwinkel angesteuert durch eine elektronische Steuereinheit ein gleichsinniger oder gegensinniger Zusatz-Lenkwinkel hinzugefügt werden kann, insbesondere mit einem eine mechanische Kopplung zwischen der Lenkhandhabe des Fahrers und einem den lenkbaren Vorderrädern zugeordneten Lenkgetriebe gewährleistenden Überlagerungs-Lenksystem, sowie mit einer Lenkfunktion an den Hinterrädern, die angesteuert durch eine elektronische Steuereinheit über eine Stelleinheit mit einem geeigneten Getriebe einen Lenkwinkel an den Hinterrädern einstellen kann, wobei ein übergeordnetes fahrdynamisches Regelsystem mit einem integrierten Regelansatz vorgesehen ist, der die Vorderräder-Lenkfunktion mit der Lenkfunktion an den Hinterrädern verknüpft und somit bei der Ausführung einer dieser beiden Funktionen den geregelten Eingriff der anderen dieser beiden Funktionen berücksichtigt, und die Vorderräder-Lenkfunktion und die Lenkfunktion an den Hinterrädern wie einzelne Aktuatoren ansteuert.

Bekannt und an moderneren Kraftfahrzeugen weit verbreitet sind Bremsregelsysteme, die mit Hilfe von radindividuellen Bremseingriffen bzw. Bremsdruckmodulationen in der Lage sind, den Radschlupf in verschiedenen Fahrsituationen zu beeinflussen und so die Stabilität des Fahrzeugs zu erhöhen. Ein sog. ABS verhindert bei Bremsvorgängen das Blockieren eines oder mehrerer Räder, ein sog. ASC minimiert im angetriebenen Fall den Antriebsschlupf der Räder und erhöht somit die Traktion und deren Seitenführungsvermögen, und schließlich vermögen elektronische Stabilisierungsprogramme (ESP) bei einer Kurvenfahrt des Fahrzeugs einem Über- bzw. Untersteuern durch Aufprägung eines Giermoments entgegenzuwirken.

Bekannt, jedoch derzeit weitaus seltener in Serie sind Fahrzeug-Lenksysteme, die unabhängig von der Lenkradwinkeleingabe des Fahrzeugs-Fahrers bzw. überlagert zu dieser Lenkwinkel an den Vorderrädern einzustellen in der Lage sind. Auch mit einem solchen Vorderräder-Lenksystem kann eine Stabilisierung des Fahrzeugs in kritischen Fahrzuständen erreicht werden, wobei im wesentlichen auf die selben Sensorinformationen zugegriffen wird wie bei einem stabilisierenden Bremsregelsystem, nämlich auf ein den Fahrer-Lenkwunsch wiedergebendes Sensor-Signal, auf ein die Fahrzeug-Geschwindigkeit wiedergebendes Sensor-Signal, auf ein die Fzg.-Ouerbeschleunigung wiedergebendes Signal sowie auf ein die Gierbewegung (insbesondere Giergeschwindigkeit) des Fahrzeugs wiedergebendes Signal. Damit dann weiterhin das stabilisierende Bremsregelsystem zuverlässig arbeiten kann, muss dieses den tatsächlichen Lenkwinkel an den lenkbaren Vorderrädern kennen und in seinem fahrdynamischen Rechenmodell berücksichtigen, d.h. den vom Fahrer vorgegebenen Lenkwinkel und den von der elektronischen Steuereinheit des Lenksystems hinzugefügten gleichsinnigen oder gegensinnigen Zusatz-Lenkwinkel. Da hier die stabilisierende Funktion auf zwei Systeme, nämlich auf ein regelbares Lenksystem für die Fzg.-Vorderräder sowie auf ein Bremsregelsystem verteilt wird, kann es erforderlich sein, beispielsweise die Eingriffsschwellen für die Bremsregelung geeignet anzupassen. Dies kann dann zur Folge haben, dass zunächst versucht wird, ein Über- oder Untersteuern zunächst über das aktive Lenksystem zu kompensieren, während das Bremsregelsystem erst dann eingreift, wenn der Eingriff über die Lenkung für eine erfolgreiche Stabilisierung nicht ausreicht.

Weiterer bekannter Stand der Technik sind Lenksysteme, die in der Lage sind, die Räder an der Fzg.-Hinterachse zu lenken, d.h. den Schräglaufwinkel der Hinterräder gezielt zu verändern, wobei diese Systeme zumeist in Form einer Steuerung ausgebildet sind, d.h. in Abhängigkeit von einer bestimmten Randbedingung wird ein hierzu geeignet vorgegebener Lenkwinkel an den Fzg.-Hinterrädern eingestellt. Üblicherweise wird dieser Hinterachs-Lenkwinkel dabei in Abhängigkeit von der Fahrgeschwindigkeit des Fahrzeugs bei Vorgabe eines Lenkwunsches des Fahrers unter Berücksichtung der vorgegebenen Lenkrichtung derart eingestellt, dass sich ein verbessertes Fahrverhalten ergibt. So wird bei niedrigen Fahr-Geschwindigkeiten durch einer schnelleren Aufbau der Fzg.-Giergeschwindigkeit dessen Kurvenwilligkeit bzw. Agilität erhöht, während bei höheren Fahr-Geschwindigkeiten durch Reduzierung des Schwimmwinkels mittels stationärem Mitlenken der Hinterräder eine bessere Stabilität erreicht wird. Indirekt wird auch hierbei die Agilität des Fahrzeugs gesteigert, und zwar indem aufgrund der Reduzierung des Schwimmwinkels eine vergrößerte Lenkwinkelvorgabe durch den Fahrer erforderlich ist. Hingegen kann im sehr geringen Geschwindigkeitsbereich, so insbesondere beim Einparken, ein reduzierter Wendekreis und somit ein verringerter Lenkrad-Winkelbedarf quasi aufgrund einer virtuellen Verkürzung des Fzg.-Radstandes erreicht werden.

In US 5,615,117 ist ein Regelverfahren für ein Vorderachs- und Hinterachs-Lenksystem eines Fahrzeugs gemäß dem Oberbegriff des Anspruchs 1 beschrieben, mit Regelung beider Lenkungen im Hinblick auf eine Stabilisierung des Fahrzeug-Fahrverhaltens. Weiteren bekannten Stand der Technik zeigt die DE 43 05 155 A1 mit einem Fahrdynamikregelsystem, bei dem ein übergeordneter Fahrdynamikregler zur Fahrzeug-Stabilisierung zunächst mit allgemein bekanntem asymmetrischen Bremseingriff arbeitet (sog. "ESP") und parallel hierzu zur Begrenzung des Fahrzeug-Schwimmwinkels eine Hinterachslenkung geeignet ansteuert.

In eine vergleichbare Richtung geht das aus der DE 197 49 005 A1 bekannte Verfahren zur Regelung von die Fahrzeugbewegung repräsentierenden Bewegungsgrößen, wobei ein sog. "Systemkoordinator" einerseits einen Fahrdynamikregler mit Bremseingriff und andererseits einen Querdynamikregler ansteuert, der einem vom Fahrer vorgegebenen Lenkwinkel einen geeigneten zusätzlichen Lenkwinkel an den lenkbaren Vorderrädern des Fahrzeugs hinzufügen kann. Ferner kann der sog. Systemkoordinator noch auf einen Vertikaldynamikregler einwirken. Schließlich ist in der DE 100 16 343 C2 ein Verfahren zur dynamischen Fahrzeugsteuerung für ein Kraftfahrzeug bekannt, mit einer sog. Stationär-Gierwinkelgewinn-Bremskraftsteuerung, mit Hilfe derer das Fahrzeug bei Bedarf stabilisiert wird, und welcher ein Vierrad-Lenksteuersystem derart hinzugefügt ist, dass die für den Fahrer des Fahrzeugs spürbare Gierwinkel-Dämpfungscharakteristik bei einem stabilisierenden Brems-Regeleingriff die gleiche bleibt wie ohne derartigen Regeleingriff. Bei diesem bekannten System greift also zunächst das Bremssystem stabilisierend ein und abhängig davon werden mit der Vierrad-Lenkung geeignete Lenkwinkel eingestellt.

Für ein Kraftfahrzeug nach dem Oberbegriff des Anspruchs 1 soll nun eine weitere Verbesserung, die sich insbesondere auf die Fahrzeug-Stabilisierung in kritischen oder teilkritischen Fahrzuständen mittels geregelter Lenkeingriffe vorteilhaft auswirkt, aufgezeigt werden (= Aufgabe der vorliegenden Erfindung).
Die Lösung dieser Aufgabe ist gekennzeichnet durch ein Bremsdruck-Regelsystem, das zur Stabilisierung des Fahrzeugs dessen Gierbewegung auswertet und durch gezielten radindividuellen Bremsdruckaufbau ein Gegen-Giermoment aufbauen kann, wobei das Bremsdruck-Regelsystem die an den Vorderrädern und Hinterrädern eingestellten Lenkwinkel im Rahmen der Auswertung der Fzg.-Gierbewegung berücksichtigt und das übergeordnete fahrdynamische Regelsystem das Bremsdruck-Regelsystem wie einen intelligenten Aktuator ansteuert.

Es sind somit die beiden Funktionen einer Vorderrad-Lenkung sowie einer Hinterrad-Lenkung miteinander verknüpft, wobei jede dieser beiden Funktionen geregelt (und nicht nur gesteuert) abläuft. Zwischen der Vorderachs-Lenkung und der Hinterachslenkung erfolgt eine Kommunikation und es wird bei der Regelung jedes dieser beiden Systeme das ebenfalls geregelte Verhalten des anderen "Partner"-Systems berücksichtigt. Es liegt somit ein integrierter Regelansatz dieser beiden Systeme mit gegenseitiger Abstimmung vor. Gegebenenfalls kann hierbei ein Rad-Schlupfregelsystem noch funktional integriert werden, d.h. dass Schlupfregelvorgänge insbesondere an den Hinterrädern insbesondere bei der Einstellung der HinterachsLenkung mit berücksichtigt werden.

Es ist ein übergeordnetes fahrdynamisches Regelsystem vorgesehen, welches die Vorderräder-Lenkfunktion und die Lenkfunktion an den Hinterrädern quasi wie einzelne "intelligente" Aktuatoren ansteuert. Zusätzlich ist eine Kommunikation zwischen dieser übergeordneten Regelung und einem Bremsregelsystem, welches ebenfalls eine Fzg.-Stabilisierungsfunktion beinhaltet, vorgesehen. In diesem Bremsregelsystem werden dann die an der Vorderachse und an der Hinterachse des Fahrzeugs eingestellten Lenkwinkel berücksichtigt, wobei die fahrdynamische Regelung, die Vorderradlenkung und die Hinterradlenkung auch beliebig auf vorhandene Steuergeräte verteilt sein können. Dabei steuert das genannte übergeordnete fahrdynamische Regelsystem zur Stabilisierung des Fahrzeugs auch das Bremsdruck-Regelsystem quasi wie einen intelligenten Aktuator an.

Dabei wird zur Stabilisierung in instationären Fahrzuständen vorrangig mittels der Lenkfunktion an den Hinterrädern der Schwimmwinkel des Fahrzeugs reduziert, während der daraus resultierende erhöhte Lenkwinkelbedarf an den Vorderrädern durch das Vorderräder-Lenksystem, das wie angegeben einem vom Fahrer vorgegebenen Lenkwinkel einen gleichgerichteten (oder hier nicht benötigten gegengerichteten) Lenkwinkel hinzufügen kann, ausgeglichen wird. Dies ist nun in besonders effizienter Weise dadurch möglich, dass die Vorderräder-Lenkfunktion mit der Lenkfunktion an den Hinterrädern verknüpft ist und somit bei der Ausführung einer dieser beiden Funktionen der geregelte Eingriff der anderen dieser beiden Funktionen berücksichtigt wird. Im übrigen kann (generell) die Einstellung eines bzw. der Hinterrad-Lenkwinkel(s) geregelt auch in Abhängigkeit vom vom Fahrer vorgegebenen Größen, nämlich insbesondere dem Lenkwinkel und/oder von der vom Fahrer vorgegebenen Lenkwinkel-Änderungsgeschwindigkeit erfolgen.

Die vorgeschlagene funktionale Integration der Vorderachslenkfunktion und der Hinterachslenkfunktion zeichnet sich durch ein besseres Gesamt-Verhalten aus als die Summe (Koexistenz) der Einzelsysteme. Vorteilhafterweise lässt sich das Spannungsfeld zwischen Agilität und Stabilität auf diese Weise besser entzerren und es kann durch den koordinierten Eingriff der beiden aktiven Lenksysteme ein stabilisierender Eingriff über das Bremsregelsystem erst später als bislang erfolgen, so dass für den Fahrer störende Bremseingriffe wesentlich seltener ausgeführt werden. Vorteilhafterweise bringt die vorgeschlagene "Paketierung" der Systeme eine Verkleinerung der Variantenvielfalt und somit eine Verringerung des Abstimmaufwandes, wobei durchaus eine Partitionierung der fahrdynamischen Regelfunktionen, nämlich der Vorder- und Hinterachslenkung sowie der Bremsenschlupfregelung auf beliebige Steuergeräte vorgesehen sein kann.

## Patentansprüche

1. Kraftfahrzeug mit lenkbaren Vorderrädern und einem Lenksystem, mit welchem dem vom Fahrer vorgegebenen Lenkwinkel angesteuert durch eine elektronische Steuereinheit ein gleichsinniger oder gegensinniger Zusatz-Lenkwinkel hinzugefügt werden kann, insbesondere mit einem eine mechanische Kopplung zwischen der Lenkhandhabe des Fahrers und einem den lenkbaren Vorderrädern zugeordneten Lenkgetriebe gewährleistenden Überlagerungs-Lenksystem, sowie mit einer Lenkfunktion an den Hinterrädern, die angesteuert durch eine elektronische Steuereinheit über eine Stelleinheit mit einem geeigneten Getriebe einen Lenkwinkel an den Hinterrädern einstellen kann, wobei ein übergeordnetes fahrdynamisches Regelsystem mit einem integrierten Regelansatz zur Stabilisierung kritischer oder teilkritischer Fahrzustände unter Beobachtung der Fahrzeug-Gierbewegung vorgesehen ist, der die Vorderräder-Lenkfunktion mit der Lenkfunktion an den Hinterrädern verknüpft und somit bei der Ausführung einer dieser beiden Funktionen den geregelten Eingriff der anderen dieser beiden Funktionen berücksichtigt und die Vorderräder-Lenkfunktion und die Lenkfunktion an den Hinterrädern wie einzelne Aktuatoren ansteuert, wobei zur Stabilisierung in instationären Fahrzuständen vorrangig mittels der Lenkfunktion an den Hinterrädern der Schwimmwinkel des Fahrzeugs reduziert wird und der daraus resultierende erhöhte Lenkwinkelbedarf durch das Vorderräder-Lenksystem ausgeglichen wird,
**gekennzeichnet durch** ein Bremsdruck-Regelsystem, das zur Stabilisierung des Fahrzeugs dessen Gierbewegung auswertet und **durch** gezielten radindividuellen Bremsdruckaufbau gegebenenfalls ein Gegen-Giermoment aufbauen kann, wobei das Bremsdruck-Regelsystem die an den Vorderrädern und Hinterrädern eingestellten Lenkwinkel im Rahmen der Auswertung der Fzg.-Gierbewegung berücksichtigt und das übergeordnete fahrdynamische Regelsystem das Bremsdruck-Regelsystem wie einen intelligenten Aktuator ansteuert.

2. Kraftfahrzeug nach Anspruch 1,
**dadurch gekennzeichnet, dass** eine Einstellung eines Hinterrad-Lenkwinkels in Abhängigkeit vom vom Fahrer vorgegebenen Lenkwinkel und/oder von der vom Fahrer vorgegebenen Lenkwinkel-Änderungsgeschwindigkeit erfolgt.

## Claims

1. A motor vehicle comprising steerable front wheels and a steering system with which an additional steering angle in the same direction or opposite direction can be added to the steering angle predetermined by the driver, activated by an electronic control unit, especially comprising a superimposed steering system ensuring a mechanical coupling between the steering handle of the driver and a steering gear associated with the steerable front wheels, wherein a steering function is provided at the rear wheels, which, activated by an electronic control unit via an actuator with a suitable gear, can adjust a steering angle at the rear wheels, an overriding travel-dynamic control system with an integrated approach being provided, which links the front wheel steering function with the steering function at the rear wheels and therefore, in carrying out one of these two functions, takes into account the controlled intervention of the other of these two functions and activates the front wheel steering function and steering function at the rear wheels like individual actuators, **characterised by** a brake pressure control system which, to stabilise the vehicle, evaluates its yaw movement and can build up a counter yawing moment by a targeted individual wheel build-up of brake pressure, with the brake pressure control system taking into account the steering angle adjusted at the front wheels and rear wheels during the evaluation of the vehicle yaw movement and the overriding travel-dynamic control system activating the brake pressure control system like an intelligent actuator, whereat the float angle of the vehicle is reduced, primarily by means of the steering function at the rear wheels, for stabilisation in unsteady vehicle states, while the increased steering angle requirement resulting therefrom is compensated by the front wheel steering system,
**characterised by** a brake pressure control system which, to stabilise the vehicle, evaluates its yaw movement and can build up a counter yawing moment by a targeted individual wheel build-up of brake pressure, with the brake pressure control system taking into account the steering angle adjusted at the front wheels and rear wheels during the evaluation of the vehicle yaw movement and the overriding travel-dynamic control system activating the brake pressure control system like an intelligent actuator.

2. A motor vehicle according to claim 1, **characterised in that** a rear wheel slip angle is adjusted as a function of the steering angle predetermined by the driver and/or of the steering angle changing speed predetermined by the driver.

## Revendications

1. Véhicule automobile à roues avant directrices et système de direction qui permet d'ajouter un angle de braquage supplémentaire dans le même sens ou dans le sens opposé à l'angle de braquage prédéfini par le conducteur de manière commandée par une unité de commande électronique, comprenant en particulier un système de direction de superposition assurant un couplage mécanique entre la manette de direction du conducteur et un boîtier de direction associé aux roues avant directrices, dans lequel une fonction de direction des roues arrières peut régler un angle de braquage aux roues arrières à l'aide d'une unité de réglage munie d'un engrenage approprié et commandée par une unité de commande électronique, un système de régulation de la dynamique de roulage prioritaire étant prévu pour la stabilisation d'états de roulement critiques ou semi-critiques en surveillant les mouvements de lacet du véhicule, avec un modèle de régulation intégré, combinant la fonction de direction des roues avant avec la fonction de direction sur les roues arrières et tenant ainsi compte, lors de l'exécution d'une de ces deux fonctions, de l'intervention régulée de l'autre de ces deux fonctions et en commandant la fonction de direction des roues avant et la fonction de direction sur les roues arrières comme des actionneurs individuels,
pour la stabilisation dans des situations de roulage non stationnaires, l'angle de flottement du véhicule est réduit principalement au moyen de la fonction de direction sur les roues arrières, tandis que le besoin en angle de braquage augmenté en résultant est compensé par le système de direction des roues avant,
**caractérisé par**
un système de régulation de la pression de freinage qui pour stabiliser le véhicule exploite le mouvement de lacet de celui-ci et peut établir un couple de lacet antagoniste par un établissement de pression de freinage ciblé individuel pour chaque roue, le système de régulation de la pression de freinage tenant alors compte des angles de braquage réglés sur les roues avant et arrières dans le cadre de l'exploitation du mouvement de lacet du véhicule, et le système de régulation de la dynamique de roulage prioritaire commandant le système de régulation de la pression de freinage comme un actionneur intelligent.

2. Véhicule automobile selon la revendication 1,
**caractérisé en ce qu'**
un réglage d'un angle de dérive de roue arrière s'effectue en fonction de l'angle de braquage prédéfini par le conducteur et/ou de la vitesse de modification de l'angle de braquage prédéfinie par le conducteur.
